(19) Europäisches Patentamt
European Patent Office
Office européen des brevets

(11) **EP 4 738 693 A1**

(12) **EUROPEAN PATENT APPLICATION**
published in accordance with Art. 153(4) EPC

(43) Date of publication:
06.05.2026 Bulletin 2026/19

(21) Application number: 24831531.9

(22) Date of filing: 27.05.2024

(51) International Patent Classification (IPC):
*H02P 21/12* (2016.01)   *H02P 27/06* (2006.01)

(52) Cooperative Patent Classification (CPC):
H02P 21/12; H02P 27/06

(86) International application number:
PCT/JP2024/019422

(87) International publication number:
WO 2025/004660 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105070

(71) Applicant: **DENSO CORPORATION**
**Kariya-city, Aichi 448-8661 (JP)**

(72) Inventors:
• **HASHIZUME, Ryoya**
**Nisshin-city, Aichi 470-0111 (JP)**
• **TOYAMA, Keisuke**
**Nisshin-city, Aichi 470-0111 (JP)**

(74) Representative: **TBK**
**Bavariaring 4-6**
**80336 München (DE)**

(54) **CONTROL DEVICE FOR POWER CONVERTER, AND PROGRAM**

(57) A control device (60) is applicable to a system including: a rotary electric machine (20) having armature windings (24U, 24V, 24W) and a field winding (22), a storage unit (10) that stores the driving power for the rotary electric machine, a first power converter (31) electrically connected to the armature windings and which controls the current flowing through the armature windings, and a second power converter (33) electrically connected to the field winding and controls the current flowing through the field winding. The control device includes a first control unit that performs switching control of the first power converter in a state in which an AC power supply (41) is electrically connected to the storage unit via the armature windings and the first power converter so that a current flows from the AC power supply to the power storage unit, and a second control unit that performs switching control of the second power converter so that torque of the rotary electric machine generated during switching control of the first power converter is reduced compared to when no current flows through the field winding.

FIG.1

## Description

[Cross-Reference to Related Applications]

The present application is based on and claims the benefit of priority from earlier Japanese Patent Application No. 2023-105070 on June 27, 2023, contents of which are incorporated herein by reference.

[Technical Field]

The present disclosure relates to a control device for a power converter and a program.

[Background Art]

A system is known that includes a storage unit, a power converter electrically connected to the storage unit, and a rotary electric machine having armature windings and a field winding electrically connected to the power converter. In this system, an AC power supply is electrically connected to the storage unit via the armature windings and the power converter, thereby charging the storage unit. Then, during charging of the storage unit via the AC power supply, the current flowing through the field winding is interrupted to reduce the torque of the rotary electric machine. An example of such a technique is disclosed in Patent Literature 1.

[Citation List]

[Patent Literature]

[PTL 1] WO 2010/012924

[Summary of the Invention]

Even when charging the storage unit via the AC power supply while interrupting the field winding current, torque may still be generated in the rotary electric machine due to current flowing through the armature windings. Various problems may arise due to the torque generated by the rotary electric machine during charging of the storage unit.

The primary purpose of the present disclosure is to provide a control device for a power converter and a program capable of suppressing torque in a rotary electric machine from being generated during charging of a storage unit, thereby preventing various problems.

The present disclosure is:
A control device for a power converter applicable to a system, the system including:

a rotary electric machine having armature windings and a field winding,
a storage unit that stores the drive power of the rotary electric machine,
a first power converter electrically connected to the armature windings and which controls the current flowing through the armature windings,
a second power converter electrically connected to the field winding and controls the current flowing through the field winding,
a first control unit that performs switching control of the first power converter in a state in which an AC power supply is electrically connected to the storage unit via the armature windings and the first power converter so that a current flows from the AC power supply to the power storage unit, and
a second control unit that performs switching control of the second power converter so that torque of the rotary electric machine generated during switching control of the first power converter is reduced compared to when no current flows through the field winding.

When the storage unit is electrically connected to the AC power supply via the armature windings and the first power converter, switching control of the first power converter is performed to enable current to flow from the AC power supply to the storage unit. This charges the storage unit. In this case, current flowing through the armature windings generates reluctance torque, which can cause various problems. In this regard, in a configuration where the rotary electric machine includes the field winding, it is possible to control a magnet torque generated by passing current through the field winding and exciting the field winding. The energization of the field winding can be controlled by performing switching control of the second power converter.

Therefore, in the present disclosure, switching control of the second power converter is performed so that the generated torque of the rotary electric machine during switching control of the first power converter is reduced compared to when no current flows through the field winding. This reduces the total torque from the magnetizing torque and the reluctance torque compared to when no current flows through the field winding. Therefore, it is possible to suppress torque from being generated by the rotary electric machine during charging of the storage unit. As a result, it is possible to suppress problems caused by the torque generated by the rotary electric machine from occurring during charging of the storage unit.

[Brief Description of the Drawings]

The above features of the present disclosure will be made clearer by the following detailed description, given referring to the appended drawings. In the accompanying drawings:

Fig. 1 shows an overall configuration diagram of an in-vehicle system according to a first embodiment;
Fig. 2 shows a schematic diagram of a first coordinate conversion unit;

Fig. 3 shows a schematic diagram of a second coordinate conversion unit;

Fig. 4 shows a functional block diagram of a three-phase charging control performed by a control device;

Fig. 5 shows timing charts illustrating an example of three-phase charging control;

Fig. 6 shows an example of the three-phase charging control;

Fig. 7 shows a diagram explaining torque reduction control;

Fig. 8 shows another diagram explaining torque reduction control;

Fig. 9 shows a functional block diagram of torque reduction control performed by the control device;

Fig. 10 shows timing charts illustrating an example of torque reduction control;

Fig. 11 shows a flowchart illustrating a processing procedure of external charging control;

Fig. 12 shows timing charts illustrating an example of external charging control;

Fig. 13 shows timing charts illustrating control in a comparative example;

Fig. 14 shows a timing chart explaining torque reduction control according to a second embodiment;

Fig. 15 shows a diagram illustrating a gear tooth contact state according to a comparative example;

Fig. 16 shows a diagram illustrating a state in which gear tooth contact is prevented;

Fig. 17 shows a schematic timing chart illustrating a change in a torque generated by a rotor;

Fig. 18 shows timing charts illustrating an example of torque reduction control;

Fig. 19 shows an overall configuration diagram of an in-vehicle system according to another embodiment; and

Fig. 20 shows an overall configuration diagram of an in-vehicle system according to yet another embodiment.

[Description of the Embodiments]

<First Embodiment>

The following describes a first embodiment, which embodies a control device related to the present disclosure, with reference to the drawings. A system equipped with the control device of the present embodiment is installed in electrically powered vehicles such as electric vehicles and hybrid vehicles.

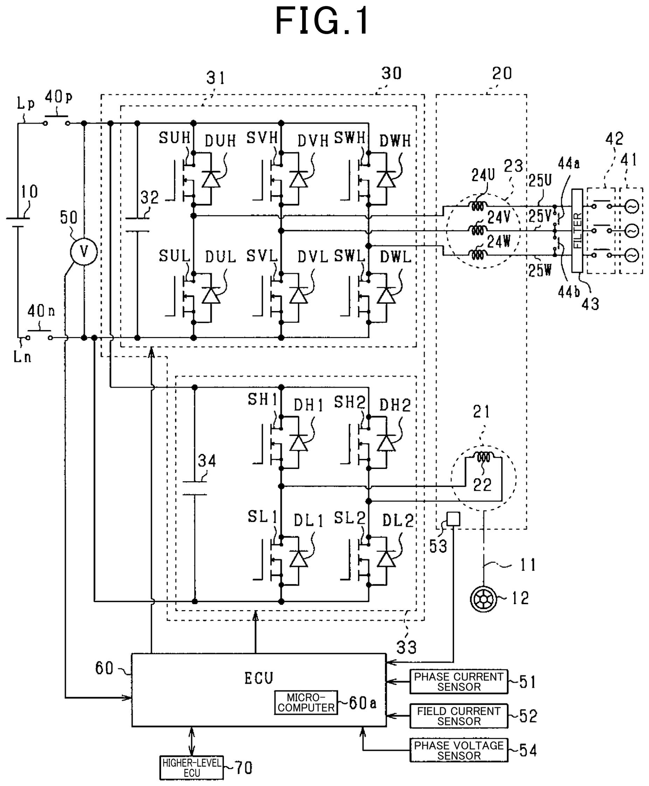

As shown in Fig. 1, the system includes a storage battery 10 (corresponding to a storage unit) and a rotary electric machine 20. The rotary electric machine 20 is a wound-field type rotary electric machine in the present embodiment. The rotary electric machine 20 of the present embodiment is a rotary electric machine having forward polarity, characterized by a d-axis inductance Ld being larger than a q-axis inductance Lq.

The storage battery 10 is a power supply that supplies driving power to the rotary electric machine 20. The storage battery 10 may be, for example, a battery pack including a series connection of unit cells. The unit cell is either a single battery cell or a series connection of a plurality of battery cells. The battery cell is a secondary battery, such as a lithium-ion battery.

The rotary electric machine 20 is a device that imparts rotational power to drive wheels 12 (corresponding to a rotating drive target) of the vehicle to rotate the drive wheels 12. The rotary electric machine 20 is equipped with a rotor 21. The rotor 21 includes a rotor core and a plurality of field pole sections extending radially from the rotor core. The field pole sections are wound with a field winding 22.

The system is equipped with a power transmission mechanism 11. A rotational shaft of the rotor 21 is capable of transmitting power to the drive wheels 12 of the vehicle via the power transmission mechanism 11. The power transmission mechanism 11 includes a transmission device and a shaft. The transmission device may be, for example, a speed reduction device, and includes at least one pair of gears mesh with each other. A torque generated by the rotary electric machine 20 functioning as an electric motor is transmitted to the drive wheels 12 via the power transmission mechanism 11, causing the drive wheels 12 to rotate. This enables the vehicle to travel.

The rotary electric machine 20 is equipped with a stator 23. The stator 23 includes an armature core and armature windings. The armature core includes a ring-shaped back yoke portion and a plurality of tooth portions extending radially from the back yoke portion toward the rotor 21. The armature windings are U, V, and W phase windings 24U, 24V, and 24W. Note that the rotary electric machine 20 may be, for example, an in-wheel motor integrally provided on the drive wheels 12 of the vehicle, or an onboard motor provided on a vehicle body.

The system includes a power converter 30. The power converter 30 includes an inverter 31 and a field energizing circuit 33. The inverter 31 converts direct current from storage battery 10 into alternating current and supplies it to the armature windings 24. The inverter 31 includes a series connection of U, V, W phase upper arm switches SUH, SVH, and SWH, and U, V, W phase lower arm switches SUL, SVL, SWL.

Drain terminals, which are high-potential-side terminals of the U, V, W phase upper arm switches SUH, SVH, and SWH, are connected to a positive terminal of the storage battery 10 via a high-potential-side electrical path Lp. Source terminals, which are lower-potential-side terminals of the U, V, W phase lower arm switches SUL, SVL, and SWL, are connected to a negative terminal of the storage battery 10 via low-potential-side electrical path Ln. Each electrical path Lp, Ln is a conductive member such as a busbar.

In each phase, connection points of the upper arm switches SUH, SVH, and SWH and the lower arm switches SUL, SVL, and SWL are electrically connected to first ends of the windings 24U, 24V, and 24W. Second ends of the U, V, W phase windings 24U, 24V, and 24W are capable of being connected to each other.

The inverter 31 includes a smoothing capacitor, namely a first capacitor 32. Note that the first capacitor 32 may be disposed outside the inverter 31.

The field energizing circuit 33 supplies current from the storage battery 10 to the field winding 22. The field energizing circuit 33 is a full-bridge circuit including a series connection of a first upper arm switch SH1 and a first lower arm switch SL1, and a series connection of a second upper arm switch SH2 and a second lower arm switch SL2.

Drain terminals, which are high-potential-side terminals of the first and second upper arm switches SH1 and SH2, are connected to the positive terminal of the storage battery 10 via the high-potential-side electrical path Lp. Source terminals, which are low-potential-side terminals of the first and second lower arm switches SL1 and SL2s, are connected to the negative terminal of the storage battery 10 via the low-potential-side electrical path Ln. A first end of the field winding 22 is connected to a connection point of the first upper arm switch SH1 and the first lower arm switch SL1 via a brush (not shown). A second end of the field winding 22 is connected to a connection point of the second upper arm switch SH2 and the second lower arm switch SL2 via a brush (not shown).

In the present embodiment, each switch SUH to SWL and SH1 to SL2 is a bidirectional switching element that, when turned on, permits current flow from drain to source and from source to drain. For example, each switch SUH to SWL and SH1 to SL2 is an N-channel MOSFET (Metal Oxide Semiconductor Field Effect Transistor). Each switch SUH, SVH, SWH, SUL, SVL, SWL, SH1, SH2, SL1, SL2 includes a body diode DUH, DVH, DWH, DUL, DVL, DWL, DH1, DH2, DL1, DL2. Note that the inverter 31 corresponds to a first power converter, and the field energizing circuit 33 corresponds to a second power converter.

The field energizing circuit 33 includes a smoothing capacitor, namely a second capacitor 34. Note that the second capacitor 34 may be provided outside the field energizing circuit 33. Alternatively, instead of providing the second capacitor 34 individually for the field energizing circuit 33 and the first capacitor 32 individually for the inverter 31, a common capacitor may be provided for both the inverter 31 and the field energizing circuit 33. In this case, for example, a configuration without the second capacitor 34 may be used.

The system includes a high-potential-side main switch 40p and a low-potential-side main switch 40n. Each main switch 40p and 40n is a switch for electrically connecting or disconnecting the storage battery 10 and the power converter 30. The high-potential-side main switch 40p is disposed in the high-potential-side electrical path Lp, and the low-potential-side main switch 40n is disposed in the low-potential-side electrical path Ln. Each main switch 40p and 40n blocks bidirectional current flow when turned off and permits bidirectional current flow when turned on. For example, each main switch 40p, 40n is a mechanical relay or a semiconductor switching element.

The system is equipped with a three-phase AC power supply 41. The three-phase AC power supply 41 may be, for example, a utility power supply. In a three-phase AC power supply 41, amplitude and frequency of the three-phase output voltages are identical, and a phase of the output voltage and the output current are shifted by 120° for each phase. The three-phase AC power supply 41 constitutes an external charger capable of charging the storage battery 10. The external charger is disposed outside the vehicle and may be, for example, a stationary charger.

The system includes U, V, and W phase charging paths 25U, 25V, and 25W, input switches 42 (equivalent to a selector switch), a filter 43, and neutral point switches. In each phase, second ends of the windings 24U, 24V, and 24W are electrically connectable to the three-phase AC power supply 41 via charging paths 25U, 25V, and 25W. The filter 43 removes noise propagating through each charging path 25U, 25V, and 25W. The filter 43 is disposed to meet EMC standard requirements.

The input switches 42 are positioned on the three-phase AC power supply 41 side relative to the filter 43 in each charging path 25U, 25V, and 25W. Each input switch 42 is turned on when the storage battery 10 is charged by the three-phase AC power supply 41, and is turned off when the storage battery 10 is not being charged, or when the three-phase AC power supply 41 is not connected to the respective phase windings 24U, 24V, and 24W. The provision of each input switch 42 enables a configuration suitable for electrically connecting or disconnecting each phase winding 24U, 24V, 24W to the three-phase AC power supply 41.

The neutral point switches are switches that change the electrical connection at the second end of each phase winding 24U, 24V, and 24W. In the present embodiment, the neutral point switches include a UV-phase neutral point switch 44a that electrically connects or disconnects between the U-phase charging path 25U and the V-phase charging path 25V, and a VW-phase neutral point switch 44b that electrically connects or disconnects between the V-phase charging path 25V and the W-phase charging path 25W.

When each neutral point switch 44a and 44b is turned on, the second ends of each phase winding 24U, 24V, and 24W are electrically connected to each other. In this case, each phase winding 24U, 24V, and 24W is connected in a star configuration with a 120° electrical angle offset between them. This enables the rotary electric machine 20 into a state in which it can be driven to rotate.

On the other hand, when each neutral point switch 44a and 44b is turned off, the second ends of each phase winding 24U, 24V, and 24W become electrically disconnected from each other. In this case, in each phase, the second ends of the windings 24U, 24V, and 24W are electrically connected to the three-phase AC power supply 41 via the charging paths 25U, 25V, and 25W, thereby enabling the three-phase AC power supply 41 to charge the storage battery 10. Therefore, the provision of each neutral point switch 44a and 44b enables switching between a state of driving the rotary electric machine 20 and a state of utilizing the rotary electric machine 20 as a part of the charger for the storage battery 10.

Each input switch 42 and each neutral point switch 44a, 44b blocks bidirectional current flow when turned off and permits bidirectional current flow when turned on. For example, each input switch 42 and each neutral point switch 44a, 44b is a mechanical relay or a semiconductor switching element.

The system is equipped with a voltage sensor 50, a phase current sensor 51, a field current sensor 52, an angle sensor 53, and a phase voltage sensor 54. The voltage sensor 50 detects a voltage of the storage battery 10. The phase current sensor 51 detects a phase current flowing through at least two of the phase windings 24U, 24V, and 24W. The field current sensor 52 detects a field current flowing through the field winding 22. The angle sensor 53 detects a rotational angle (specifically, an electrical angle) of the rotor 21. The phase voltage sensor 54 detects a phase voltage of each phase winding 24U, 24V, and 24W.

The system includes a control device 60 and a higher-level control device 70 that is higher in rank than the control device 60. The detection values from each sensor 50 to 54 are input to the control device 60.

The control unit 60 is an ECU (electronic control unit) primarily composed of a microcomputer 60a. The higher-level control device 70 is also an electronic control device primarily composed of a microcomputer. The control device 60 and the higher-level control device 70 are capable of exchanging information.

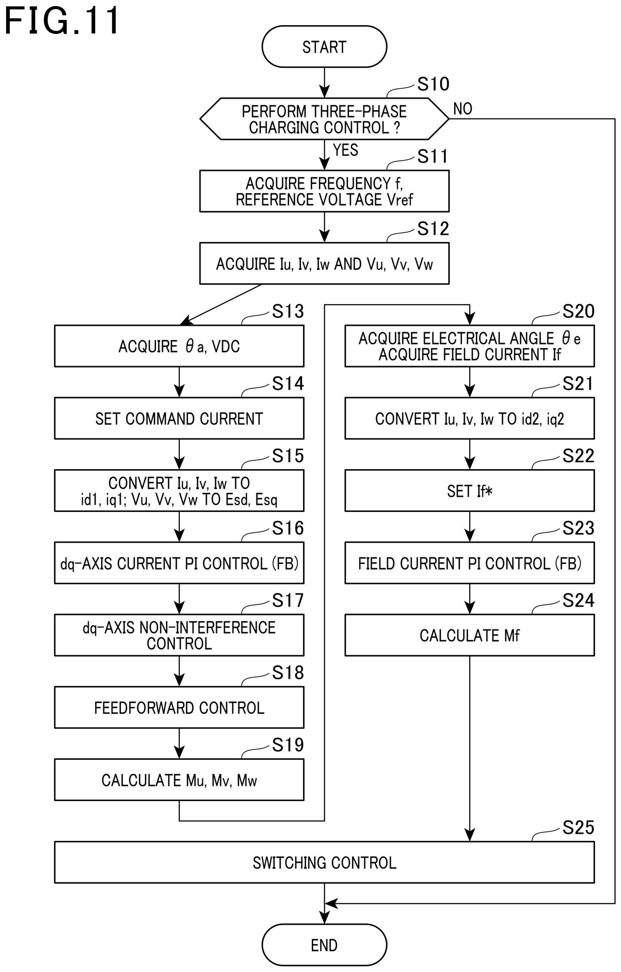

The microcomputer 60a is equipped with a CPU (Central Processing Unit). The functions provided by the microcomputer 60a can be provided by software stored in a substantive memory device and the computer that executes it, by software alone, by hardware alone, or by a combination thereof. For example, if the microcomputer 60a is provided by an electronic circuit that is hardware, it can be provided by a digital or analog circuit that contains many logic circuits. For example, the microcomputer 60a may execute a program stored in a non-transitory tangible storage medium as its own storage unit. The program includes, for example, the program for processing shown in Fig. 11, which will be described later. A method corresponding to the program is executed by executing a set of instructions that compose the program. The memory unit may be, for example, a non-volatile memory. Note that the programs stored in the storage unit can be updated via communication networks such as the internet, for example, through OTA (over the air).

The control device 60 controls each main switch 40p, 40n, each input switch 42, and each neutral point switch 44a, 44b. Specifically, when driving the rotary electric machine 20 to run the vehicle, the control device 60 turns on each main switch 40p, 40n and each neutral point switch 44a, 44b, while turning off the input switches 42.

The control device 60 performs switching control of each switch SH1 to SL2 constituting the field energizing circuit 33 to excite the field winding 22. In detail, the control device 60 performs switching control such that a first state and a second state occur alternately, in order to control the field current detected by the field current sensor 52 to a field target current. The first state is a state where the first upper arm switch SH1 and the second lower arm switch SL2 are turned on, and the second upper arm switch SH2 and the first lower arm switch SL1 are turned off. The second state is a state where the first upper arm switch SH1 and the second lower arm switch SL2 are turned off, and the second upper arm switch SH2 and the first lower arm switch SL1 are turned on.

The control device 60 performs switching control of each switch SUH to SWL constituting the inverter 31, in order to perform feedback control of a control quantity of the rotary electric machine 20 to the command value based on the detection values from each sensor 50 to 54, while the field winding 22 is in an energized state. In the present embodiment, the control quantity is torque. In each phase, the upper arm switch and the lower arm switch are alternately turned on. This feedback control transmits the rotational power of the rotor 21 to the drive wheels 12, enabling the vehicle to travel.

Next, the external charging control that charges the storage battery 10 using the three-phase AC power supply 41 will be explained.

When performing external charging control, the control device 60 turns on each main switch 40p, 40n, and each input switch 42, and turns off each neutral point switch 44a, 44b. The control unit 60 converts the AC power from the three-phase AC power supply 41 into DC power by performing switching control of the inverter 31 during external charging control. The converted DC power is supplied to the storage battery 10, and the storage battery 10 is charged.

Incidentally, during external charging control, torque may be generated in the rotary electric machine 20 due to current flowing through each phase winding 24U, 24V, and 24W. In this case, various problems may arise due to the torque generated by the rotary electric machine 20 during charging of the storage battery 10.

For example, the rotary electric machine 20 may be made higher output by adding more magnet poles or by increasing the length in the rotational axis direction (i.e., the thickness) and the length in the radial direction perpendicular to the rotational axis direction (i.e., the outer diameter) of the rotary electric machine 20. Consequently, the torque of the rotary electric machine 20 increases due to the current flowing through the U, V, and W phase windings 24U, 24V, and 24W. In this case, there is a concern that problems such as unintended rotation of the drive wheels 12 may occur during charging of the storage battery 10.

Therefore, in the present embodiment, the control device 60 performs three-phase charging control and torque reduction control during external charging control. In three-phase charging control, switching control of the inverter 31 is performed to allow current to flow from the three-phase AC power supply 41 to the storage battery 10. In torque reduction control, switching control of the field energizing circuit 33 is performed so that the torque generated by the rotary electric machine 20 during three-phase charging control is reduced compared to when no current flows through the field winding 22.

Three-phase charging control and torque reduction control will be described in detail below.

In three-phase charging control and torque reduction control, switching control is performed based on currents converted from the U, V, and W phase currents in a three-phase fixed coordinate system to a two-phase rotating coordinate system (dq coordinate system). In three-phase charging control, switching control of the inverter 31 is performed based on the current converted to a first dq coordinate system. The conversion of the U, V, and W phase currents between the first dq coordinate system and the three-phase fixed coordinate system utilizes the phase information of the input voltage supplied from the three-phase AC power supply 41 to each phase winding 24U, 24V, and 24W as periodically varying phase information.

In torque reduction control, switching control of the field energizing circuit 33 is performed based on the current converted to a second dq coordinate system. The conversion of U, V, and W phase currents between the second dq coordinate system and the three-phase fixed coordinate system utilizes the electrical angle $\theta e$ of the rotor 21 as periodically varying phase information.

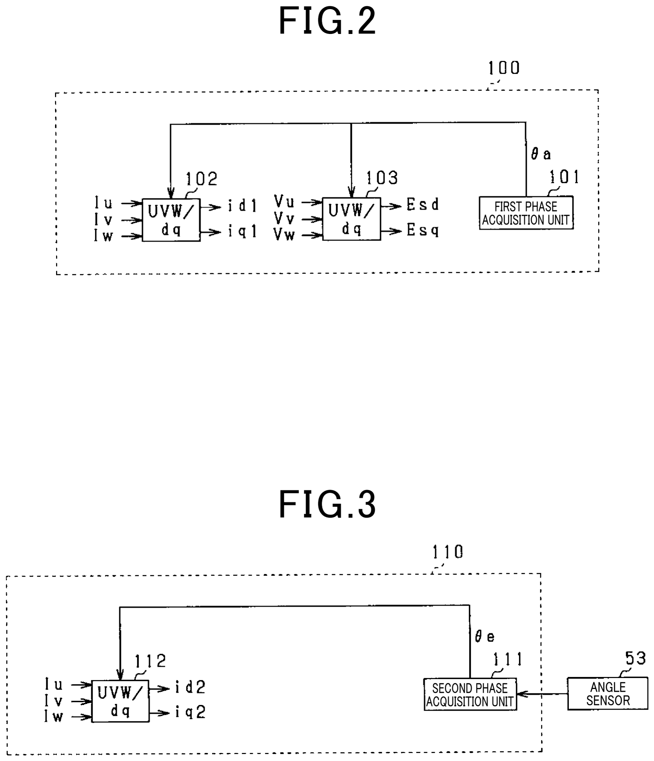

As shown in Fig. 2 and Fig. 3, the control device 60 includes a first coordinate conversion unit 100 and a second coordinate conversion unit 110. The first coordinate conversion unit 100 converts the current and voltage used for three-phase charging control into the current and voltage of the first dq coordinate system. The second coordinate conversion unit 110 converts the current used for torque reduction control into the current in the second dq coordinate system.

Specifically, the first coordinate conversion unit 100 includes a first phase acquisition unit 101, a first current conversion unit 102, and a voltage conversion unit 103. The first phase acquisition unit 101 receives a U-phase voltage Vu. The U-phase voltage Vu is an input voltage supplied from the three-phase AC power supply 41 to the U-phase winding 24U. The first phase acquisition unit 101 can use the detection value from the phase voltage sensor 54 as the U-phase voltage Vu. The first phase acquisition unit 101 acquires phase information $\theta a$ of the U-phase voltage Vu. The phase information $\theta a$ of the U-phase voltage Vu is information that varies with the same period as the U-phase voltage Vu and varies within the range of 0° to 360°. For example, the phase information $\theta a$ can be defined such that the upward zero-crossing timing of the U-phase voltage Vu is 0°, and the upward zero-crossing timing of the next U-phase voltage Vu is 360°. The first phase acquisition unit 101 is configured, for example, by a phase locked circuit.

The first current conversion unit 102 receives the phase information $\theta a$ of the U-phase voltage Vu acquired by the first phase acquisition unit 101, and the U, V, and W-phase currents Iu, Iv, and Iw. The first current conversion unit 102 can utilize the detection values from the phase current sensor 51 as the U, V, and W phase currents Iu, Iv, and Iw. The first current conversion unit 102 converts the U, V, and W phase currents Iu, Iv, Iw into a first d-axis current id1 and a first q-axis current iq1 based on the phase information $\theta a$ of the U-phase voltage Vu.

The voltage conversion unit 103 receives phase information $\theta a$ acquired by the first phase acquisition unit 101 and the U, V, W phase voltages Vu, Vv, Vw as inputs. The voltage conversion unit 103 can use the detection values from the phase voltage sensor 54 as the phase voltages Vu, Vv, and Vw. The voltage conversion unit 103 converts the U, V, and W phase voltages Vu, Vv, and Vw into d-axis and q-axis input voltages Esd and Esq based on the phase information $\theta a$.

The second coordinate conversion unit 110 includes a second phase acquisition unit 111 and a second current conversion unit 112. The second phase acquisition unit 111 receives the detection value from the angle sensor 53. The second phase acquisition unit 111 acquires the detection value from the angle sensor 53 as the electrical angle $\theta e$ of the rotor 21.

The second current conversion unit 112 receives the electrical angle $\theta e$ of the rotor 21 acquired by the second phase acquisition unit 111, and the U, V, W phase currents Iu, Iv, Iw. The second current conversion unit 112 can utilize the detection values from the phase current sensor 51 as the U, V, and W phase currents Iu, Iv, and Iw. The second current conversion unit 112 converts the U, V, and W phase currents Iu, Iv, Iw into a second d-axis current $id_2$ and a second q-axis current $iq_2$ based on the electrical angle $\theta e$ of the rotor 21.

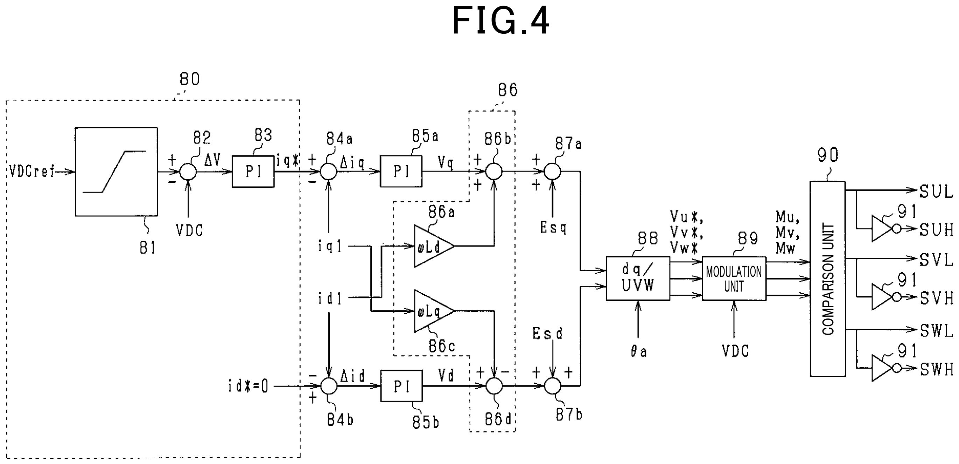

Next, three-phase charging control will be specifically described with reference to Fig. 4.

The control device 60 includes a command current setting unit 80 that sets a d-axis command current id* and a q-axis command current iq*. The command current setting unit 80 sets the d-axis command current id* to zero. The command current setting unit 80 sets the q-axis command current iq* based on the DC-side voltage of the power converter 30.

Specifically, the command current setting unit 80 includes a limiting unit 81, a voltage deviation calculation unit 82, and a voltage feedback control unit 83. A reference voltage VDCref at the DC side of the power converter 30 is input to the limiting unit 81. For example, the limiting unit 81 may use the voltage value set by the higher-level control device 70 as the reference voltage VDCref. The limiting unit 81 limits the reference voltage VDCref to the upper or lower limit of the voltage range when the reference voltage VDCref is outside the specified voltage range. The limiting unit 81 outputs the reference voltage VDCref to the voltage deviation calculation unit 82.

The voltage deviation calculation unit 82 calculates a voltage deviation ΔV by subtracting a power supply voltage VDC from the reference voltage VDCref. The voltage deviation calculation unit 82 can use the detection value from the voltage sensor 50 as the power supply voltage VDC. The voltage deviation calculation unit 82 outputs the voltage deviation ΔV to the voltage feedback control unit 83.

The voltage feedback control unit 83 calculates the q-axis command current iq* as the manipulated variable for feedback control to set the voltage deviation ΔV to zero. Note that feedback control used in the voltage feedback control unit 83 may be, for example, proportional-integral control.

The command current setting unit 80 sets the q-axis command current iq*, calculated by the voltage feedback control unit 83, and the d-axis command current id*, which is zero, as the command currents for each phase winding 24U, 24V, and 24W.

The control device 60 includes a q-axis current deviation calculation unit 84a and a d-axis current deviation calculation unit 84b. The q-axis current deviation calculation unit 84a receives the q-axis command current iq* set by the command current setting unit 80 and the first q-axis current iq1 converted by the first current conversion unit 102. The q-axis current deviation calculation unit 84a calculates a q-axis current deviation Δiq by subtracting the first q-axis current iq1 from the q-axis command current iq*.

The d-axis current deviation calculation unit 84b receives the d-axis command current id* set by the command current setting unit 80 and the first d-axis current id1 converted by the first current conversion unit 102. The d-axis current deviation calculation unit 84b calculates a d-axis current deviation Δid by subtracting the first d-axis current id1 from the d-axis command current id*.

The control device 60 includes a q-axis current feedback control unit 85a and a d-axis current feedback control unit 85b. The q-axis current feedback control unit 85a calculates a q-axis command voltage Vq as the manipulated variable for feedback control to set the q-axis current deviation Δiq to zero. The d-axis current feedback control unit 85b calculates a d-axis command voltage Vd as the manipulated variable for feedback control to set the d-axis current deviation Δid to zero.

Note that feedback control used in each feedback control unit 85a, 85b may be, for example, proportional-integral control.

The control device 60 includes a interference-suppression control unit 86. The interference-suppression control unit 86 corrects the d and q axis command voltages Vd and Vq, taking into account the electromotive force generated to interfere with components of different axes within the dq axes.

Specifically, the interference-suppression control unit 86 includes a q-axis interference-suppression term calculation unit 86a and a q-axis interference-suppression term addition unit 86b. The q-axis interference-suppression term calculation unit 86a calculates a q-axis interference-suppression term $\omega \cdot Ld \cdot id$ as the product of the first d-axis current id1 converted by the first current conversion unit 102, the d-axis inductance Ld, and the angular velocity ω. Here, the angular velocity ω is given by $\omega = 2\pi \times f$, where f is the frequency of the U, V, W phase voltages Vu, Vv, and Vw. The frequencies of the U, V, W phase voltages Vu, Vv, and Vw are, for example, 50 Hz. The q-axis interference-suppression term addition unit 86b adds the q-axis interference-suppression term calculated by the q-axis interference-suppression term calculation unit 86a to the q-axis command voltage Vq calculated by the q-axis current feedback control unit 85a.

In addition, the interference-suppression control unit 86 includes a d-axis interference-suppression term calculation unit 86c and a d-axis interference-suppression term subtraction unit 86d. The d-axis interference-suppression term calculation unit 86c calculates a d-axis interference-suppression term $\omega \cdot Lq \cdot iq$ as the product of the first q-axis current iq converted by the first current conversion unit 102, the q-axis inductance Lq, and the angular velocity ω. The d-axis interference-suppression term subtraction unit 86d subtracts the d-axis interference-suppression term calculated by the d-axis interference-suppression term calculation unit 86c from the d-axis command voltage Vd calculated by the d-axis current feedback control unit 85b.

Note that the d-axis inductance Ld and q-axis inductance Lq vary with respect to the U, V, and W phase currents Iu, Iv, Iw, the field current, and the electrical angle θe of the rotor 21. Therefore, the q-axis interference-suppression term calculation unit 86a may use a value calculated based on at least one of the U, V, W phase currents Iu, Iv, Iw, the field current, and the electrical angle θe of the rotor 21 as the d-axis inductance Ld. In addition, the d-axis interference-suppression term calculation unit 86c may use a value calculated based on at least one of the U, V, W phase currents Iu, Iv, Iw, the field current, and the electrical angle θe of the rotor 21 as the q-axis inductance Lq. The calculation of each axis inductance Ld, Lq may use information (specifically, map information or formula information) that associates the d-axis inductance Ld or the q-axis inductance Lq with at least one of the U, V, W phase currents Iu, Iv, Iw, field current, and electrical angle θe of the rotor 21.

The control device 60 includes a q-axis feedforward control unit 87a and a d-axis feedforward control unit 87b. The q-axis feedforward control unit 87a receives a q-axis input voltage Esq converted by the voltage conversion unit 103 and the q-axis command voltage Vq corrected by the q-axis interference-suppression term addition unit 86b. The q-axis feedforward control unit 87a adds the q-axis input voltage Esq as the feedforward term to the q-axis command voltage Vq. The d-axis feedforward control unit 87b receives a d-axis input voltage Esd converted by the voltage conversion unit 103 and the d-axis command voltage Vd corrected by the d-axis interference-suppression term subtraction unit 86d. The d-axis feedforward control unit 87b adds the d-axis input voltage Esd as the feedforward term to the d-axis command voltage Vd.

The control device 60 includes a fixed coordinate conversion unit 88. The fixed coordinate conversion unit 88 receives the d-axis and q-axis command voltages Vd and Vq calculated by the d-axis and q-axis feedforward control units 87a and 87b, respectively, along with the phase information θa from the first phase acquisition unit 101. The fixed coordinate conversion unit 88 converts the d-axis and q-axis command voltages Vd and Vq into the U, V, and W-phase command voltages Vu*, Vv*, and Vw* based on the phase information θa.

The control device 60 includes a modulation unit 89, a comparison unit 90, and an inversion unit 91. The modulation unit 89 receives input from the power supply voltage VDC and the U, V, W phase command voltages Vu*, Vv*, Vw* from the fixed coordinate conversion unit 88. The modulation unit 89 superimposes third-harmonic components onto the command voltages Vu*, Vv*, and Vw* in each phase. Then, the modulation unit 89 calculates modulation rates Mu, Mv, and Mw in each phase by dividing the command voltages Vu*, Vv*, and Vw* by the power supply voltage VDC. The modulation unit 89 can use the detection value from the voltage sensor 50 as the power supply voltage VDC.

The comparison unit 90 receives the phase modulation rates Mu, Mv, and Mw from the modulation unit 89. The comparison unit 90 generates operation signals for the lower arm switches SUL, SVL, and SWL in the inverter 31 based on comparisons of the magnitude of each phase modulation rate Mu, Mv, and Mw relative to the carrier signal. The operation signals for the lower arm switches SUL, SVL, and SWL are either an on-operation signal or an off-operation signal. The inversion unit 91 generates the operation signals for the respective phase upper arm switches SUH, SVH, and SWL by inverting the logic of the operation signals for the respective phase lower arm switches SUL, SVL, and SWL. Note that the carrier signal may be, for example, a triangular wave signal.

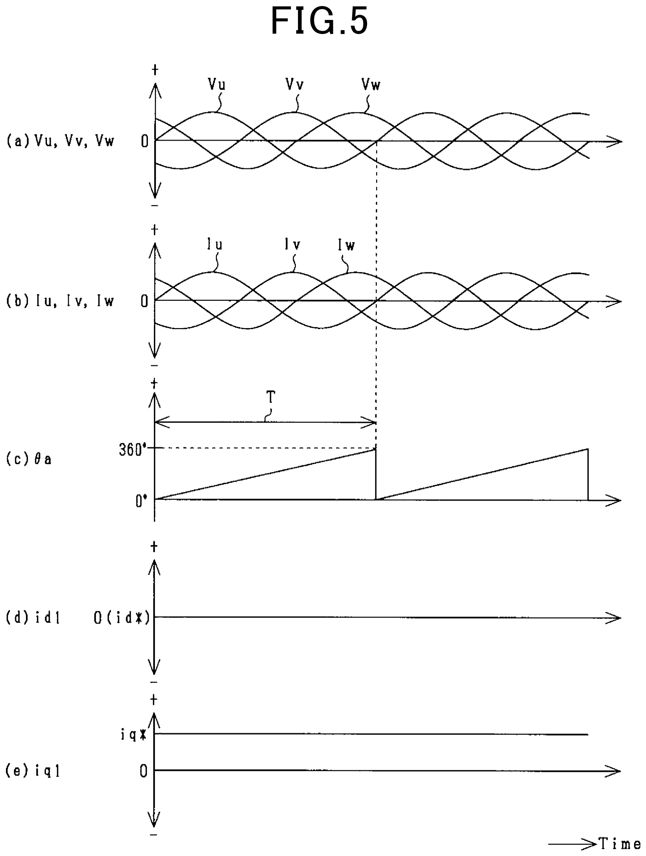

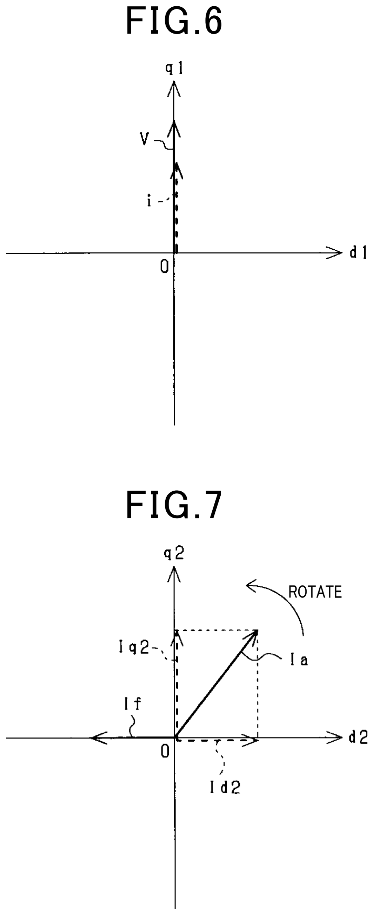

Figs. 5 and 6 show examples of voltage and current control when the three-phase charging control is performed. In Fig. 5, (a) shows the transition of each phase voltage Vu, Vv, Vw, (b) shows the transition of each phase current Iu, Iv, Iw, (c) shows the phase information θa of the U-phase voltage Vu, (d) shows the transition of the first d-axis current id1, and (e) shows the transition of the first q-axis current iq1. Fig. 6 shows a voltage vector V determined from the phase voltages Vu, Vv, and Vw, and a current vector i flowing through the phase windings 24U, 24V, and 24W, respectively, in the first dq coordinate system. Note that in Fig. 5 (b), the direction of current flow from the first end to the second end of each phase winding 24U, 24V, and 24W is defined as positive, and the direction of current flow from the second end to the first end of each phase winding 24U, 24V, and 24W is defined as negative.

The first coordinate conversion unit 100 uses phase information θa, which varies periodically with the same period T as the U-phase voltage Vu, for the transformation from the three-phase fixed coordinate system to the first dq coordinate system. In this case, the first coordinate conversion unit 100 can perform a transformation from the three-phase fixed coordinate system to the first dq coordinate system such that the direction of the voltage vector V, determined from the respective phase voltages Vu, Vv, and Vw based on the phase information θa, points toward the q-axis direction in the first dq coordinate system.

The command current setting unit 80 sets the d-axis command current id* and the q-axis command current iq* such that the currents flowing through each phase winding 24U, 24V, and 24W in the first dq coordinate system points toward the q-axis direction. In other words, the command current setting unit 80 sets the d-axis command current id* and the q-axis command current iq* so that the directions of the first d- and q-axis currents id1 and iq1 in the first dq coordinate system are aligned with the direction of the voltage vector V determined from the phase voltages Vu, Vv, and Vw. In the present embodiment, the command current setting unit 80 sets the d-axis command current id* to zero and sets the q-axis command current iq* to a value corresponding to the power supply voltage VDC.

Current feedback control of the first d- and q-axis currents id1 and iq1 is performed based on the d- and q-axis command currents id* and iq* set by the command current setting unit 80, whereby the phase currents Iu, Iv, and Iw are controlled to have waveforms in phase with the phase voltages Vu, Vv, and Vw. In other words, in the first dq coordinate system, the direction of the current vector i flowing through each phase winding 24U, 24V, 24W is controlled along the q-axis direction, which is the same direction as the voltage vector V determined from the respective phase voltages Vu, Vv, Vw. This allows the power factor determined by the voltage vector V and current vector i to be brought closer to 1, thereby improving the charging efficiency of the storage battery 10.

Next, torque reduction control will be described.

In torque reduction control, switching control of the field energizing circuit 33 is performed so that the

torque generated by the rotary electric machine 20 during three-phase charging control is reduced compared to when no current flows through the field winding 22.

**[0077]** Specifically, the generated torque Trq of the rotary electric machine 20 is composed of a magnet torque TM and a reluctance torque TR. The magnet torque TM and the reluctance torque TR can be expressed using the second d- and q-axis currents id2 and iq2 as follows: (eq1)

$$\mathrm{Trq} = \mathrm{TM} + \mathrm{TR}$$

$$= \mathrm{P} \cdot \varphi \mathrm{f} \cdot \mathrm{iq2} + \mathrm{P} \cdot (\mathrm{Ld} - \mathrm{Lq}) \cdot \mathrm{id2} \cdot \mathrm{iq2} \ \ldots \ (\mathrm{eq1})$$

**[0078]** Here, in the above equation (eq1), P denotes the number of pole pairs of the rotary electric machine 20, and φf denotes the magnetic flux generated by the field current If flowing through the field winding 22. The magnetic flux φf can be expressed using a coupling inductance Lmf as φf = Lmf × If. The coupling inductance Lmf (> 0) is an inductance of the d-axis magnetic circuit, which includes the back yoke section and tooth section of the stator 23, and the rotor core and field pole section of the rotor 21.

**[0079]** In torque reduction control, the field current to the field winding 22 is controlled, thereby controlling the magnet torque TM. In this case, the magnet torque TM is generated such that the total torque of the reluctance torque TR and the magnet torque TM is reduced compared to when no current flows through the field winding 22. For example, to apply a current to the field winding 22 such that the reluctance torque TR and the magnet torque TM cancel each other out, the field current If should be applied so that the generated torque Trq of the rotary electric machine 20 becomes zero in the above equation (eq1). In this case, the field current If should be as shown in the following equation (eq2).

[Math. 1]

$$I_f = -\frac{(L_d - L_q) i_{d2}}{L_{mf}} \ldots (\mathrm{eq2})$$

**[0080]** In the present embodiment, the rotary electric machine 20 has forward pole polarity, and Ld - Lq > 0. Therefore, in the above equation (eq2), the field current If is a current whose phase is opposite to that of the second d-axis current id2, being shifted by 180°.

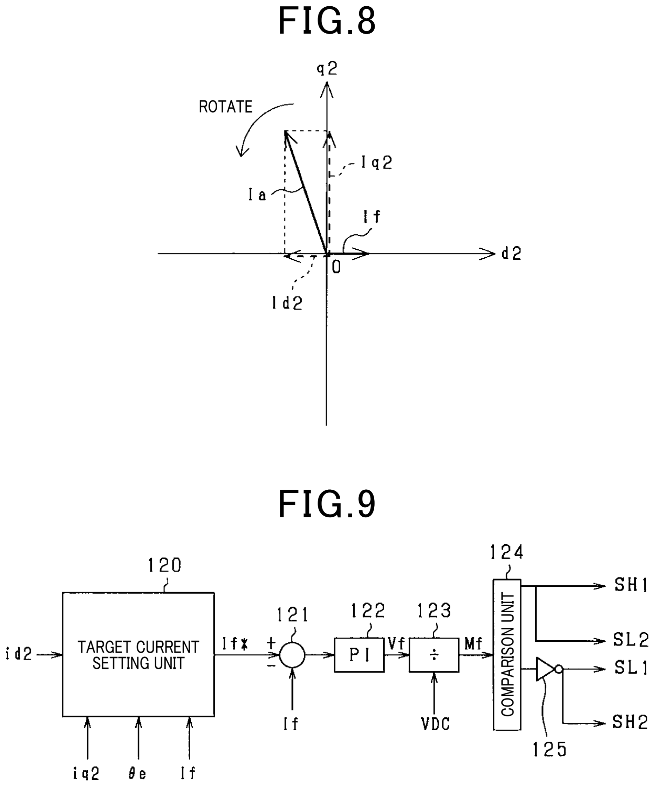

**[0081]** Here, the field current If flowing through the field winding 22 during torque reduction control will be described with reference to Figs. 7 and 8.

**[0082]** Figs. 7 and 8 schematically show the current vectors Ia flowing through each phase winding 24U, 24V, and 24W during three-phase charging control in the second dq coordinate system. The current vector Ia is a vector rotating at the frequency of each phase voltage Vu, Vv, Vw input from the three-phase AC power supply 41 in the second dq coordinate system. Therefore, the second d-axis current id2, which is the d-axis component of the current vector Ia flowing through each phase winding 24U, 24V, and 24W, is an alternating current in the second dq axis coordinate system. In the present embodiment, the rotary electric machine 20 has forward pole polarity (Ld - Lq > 0). Therefore, in torque reduction control, the control device 60 performs switching control of the field current energizing circuit 33 so that a current having an opposite phase to the second d-axis AC current id2 flows as the field current If.

**[0083]** For example, as shown in Fig. 7, the control device 60 performs switching control of the field energizing circuit 33 such that, when the second d-axis current id2 is positive, the field current If in the second dq coordinate system is generated in the negative d-axis direction. For example, as shown in Fig. 8, the control device 60 performs switching control of the field energizing circuit 33 such that, when the second d-axis current id2 is negative, the field current If in the second dq coordinate system is generated in the positive d-axis direction.

**[0084]** Torque reduction control will be specifically described with reference to Fig. 9.

**[0085]** The control device 60 includes a target current setting unit 120. The target current setting unit 120 receives the second d-axis current id2 from the second coordinate conversion unit 110. In the present embodiment, the rotary electric machine 20 has forward pole polarity (Ld - Lq > 0). Therefore, the target current setting unit 120 sets the current in phase opposition to the second d-axis current id2 as the field target current If*. This allows the field current If to be applied such that the magnet torque TM is generated in the direction opposite to that of the reluctance torque TR, taking into account the characteristics of the rotary electric machine 20. Therefore, in torque reduction control, the magnet torque TM can be generated accurately so that the total torque of the reluctance torque TR and the magnet torque TM is reduced compared to when no current flows through the field winding 22.

**[0086]** Specifically, the target current setting unit 120 sets the field target current If* using information (specifically, map information or mathematical formula information) that associates the second d-axis current id2 with the field target current If*.

**[0087]** For example, the target current setting unit 120 can set the field target current If* based on the second d-axis current id2, the d-axis and q-axis inductances Ld and Lq, and the coupling inductance Lmf. In this case, the target current setting unit 120 calculates the right-hand side of equation (eq2) based on the second d-axis current id2 input from the second current conversion unit 112, the d-axis and q-axis inductances Ld and Lq, and the coupling inductance Lmf, and then sets the calculated value as the field target current If*.

**[0088]** Note that the target current setting unit 120 may use values calculated using map information or mathe-

matical formula information for the d-axis and q-axis inductances Ld and Lq, and the coupling inductance Lmf.

For example, the d-axis inductance Ld can be calculated from map information in which the second d-axis current id2, the field current If, the electrical angle θe, and the d-axis inductance Ld are associated with each other, the second d-axis current id2 input from the second coordinate conversion unit 110, the detection value of the field current sensor 52, and the electrical angle θe acquired by the second phase acquisition unit 111. For example, the q-axis inductance Lq can be calculated from map information correlating the second q-axis current iq2, the electrical angle θe, and the q-axis inductance Lq, the second q-axis current iq2 input from the second coordinate conversion unit 110, and the electrical angle θe acquired by the second phase acquisition unit 111. For example, the coupling inductance Lmf can be calculated from map information correlating the second d- and q-axis currents id2, iq2, the field current If, the electrical angle θe, and the coupling inductance Lmf, the second d- and q-axis currents id2, iq2 input from the second coordinate conversion unit 110, the detection value of the field current sensor 52, and the electrical angle θe acquired by the second phase acquisition unit 111.

The control device 60 includes a field current deviation calculation unit 121 and a field current feedback control unit 122. The field current deviation calculation unit 121 receives the field target current If* set by the target current setting unit 120 and the field current If. The field current deviation calculation unit 121 may use the detection value from the field current sensor 52 as the field current If. The field current deviation calculation unit 121 calculates a field current deviation ΔIf by subtracting the field current If from the field target current If*. The field current deviation calculation unit 121 outputs the calculated field current deviation ΔIf to the field current feedback control unit 122.

The field current feedback control unit 122 calculates a field command voltage Vf as the manipulated variable for feedback control to set the field current deviation ΔIf to zero. Note that the feedback control used in the voltage feedback control unit 83 may be, for example, proportional-integral control.

The control device 60 includes a division unit 123, a comparison unit 124, and an inversion unit 125. The field current feedback control unit 122 inputs the field command voltage Vf to the division unit 123. The division unit 123 calculates the field modulation rate Mf by dividing the field command voltage Vf by the power supply voltage VDC. The division unit 123 can use the detection value from the voltage sensor 50 as the power supply voltage VDC.

The comparison unit 124 receives the field modulation rate Mf from the division unit 123. The comparison unit 124 generates operation signals for the first upper arm switch SH1 and the second lower arm switch SL2 based on a comparison of the field modulation rate Mf and the carrier signal. The operation signals for the first upper arm switch SH1 and the second lower arm switch SL2 are either an on-operation signal or an off-operation signal. The inversion unit 125 generates the operation signals for the first lower arm switch SL1 and the second upper arm switch SH2 by inverting the logic of the operation signals for the first upper arm switch SH1 and the second lower arm switch SL2. Note that the carrier signal may be, for example, a triangular wave signal.

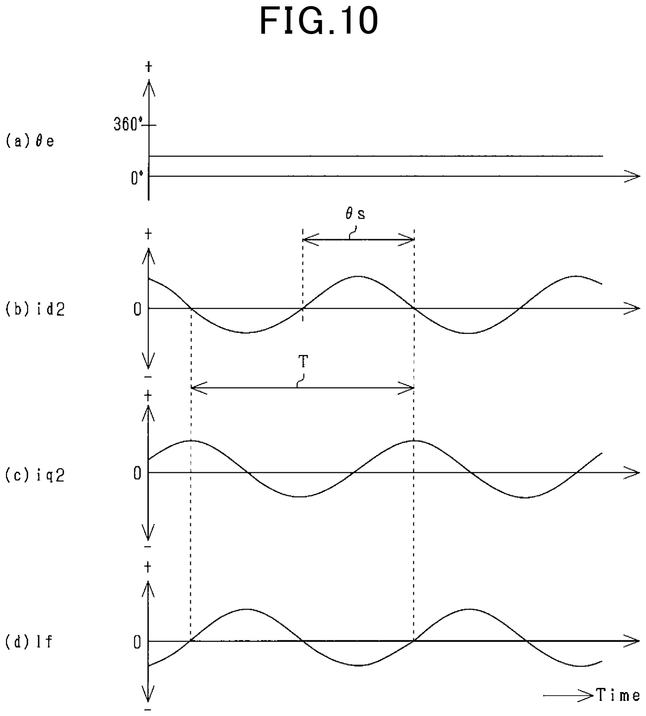

Fig. 10 shows the changes in each current when the torque reduction control is performed. In Fig. 10, (a) shows the electrical angle θe of the rotor 21, (b) shows the transition of the second d-axis current id2, (c) shows the transition of the second q-axis current q2, and (d) shows the transition of the field current If.

The second d-axis current id2 and the second q-axis current iq2 are alternating currents that fluctuate periodically with the same period T as the U-phase voltage Vu. The field current If is controlled to be an alternating current having an opposite phase to the second d-axis current id2. Fig. 10 shows a case where the phase difference θs between the field current If and the second d-axis current id2 is 180°. For example, when the phase difference θs is 180°, the phase of the field current If is advanced relative to the second d-axis current id2 by an amount corresponding to the period from the zero-up cross timing of the second d-axis current id2 to the next zero-down cross timing. By controlling the field current If to be an alternating current having an opposite phase to the second d-axis current id2, the magnet torque TM is generated such that the total torque from the reluctance torque TR and the magnet torque TM is reduced compared to when no current flows through the field winding 22. Consequently, fluctuations in the electrical angle θe of the rotor 21 are suppressed from occurring.

Fig. 11 shows the processing steps for external charging control performed by the control device 60. External charging control is performed based on instructions from the higher-level control device 70, for example. Here, it is assumed that the second terminals of each phase winding 24U, 24V, and 24W are electrically connected to the three-phase AC power supply 41, the input switch 42 is turned on, and each neutral point switch 44a and 44b is turned off.

In step S10, a determination is made as to whether to perform three-phase charging control. For example, when a command indicating external charging control is transmitted from the higher-level control device 70, it is determined that three-phase charging control is to be performed. If a negative determination is made in step S10, the present control is terminated. On the other hand, if a positive determination is made in step S10, the process proceeds to step S11.

In step S11, the frequency f of each phase voltage Vu, Vv, Vw input from the three-phase AC power supply 41 to each phase winding 24U, 24V, 24W, and the reference voltage VDCref at the DC side voltage of the power converter 30 are acquired. As the frequency f, it is possible to obtain information transmitted from the three-phase AC power supply 41 side. As the reference voltage VDCref, it is possible to obtain information transmitted from the higher-level control device 70.

In step S12, the phase currents Iu, Iv, Iw and phase voltages Vu, Vv, Vw are acquired as the currents and voltages input from the three-phase AC power supply 41 to each phase winding 24U, 24V, 24W. The detected values of the phase current sensor 51 can be obtained as the phase currents Iu, Iv, and Iw. The detected values of the phase voltage sensor 54 can be obtained as the phase voltages Vu, Vv, and Vw.

In step S13, phase information $\theta a$ is acquired based on the U-phase voltage Vu. In this case, the control device 60 functions as the first phase acquisition unit 101 described in the preceding Fig. 2. In addition, the detection value from the voltage sensor 50 is acquired as the power supply voltage VDC.

In step S14, the command current is set. In the present embodiment, the d-axis command current id* is set to zero, and the q-axis command current iq* is set based on the reference voltage VDCref and the power supply voltage VDC. In this case, the control device 60 functions as the command current setting unit 80 described in the preceding Fig. 4.

In step S15, based on the phase information $\theta a$, each phase current Iu, Iv, Iw is converted to the first d-axis and q-axis currents id1 and iq1, and each phase voltage Vu, Vv, Vw is converted to the d-axis and q-axis input voltages Esd and Esq. In this case, the control device 60 functions as the first coordinate conversion unit 100 described in the preceding Fig. 2.

In step S16, feedback control is performed for the first d- and q-axis currents id1 and iq1 based on the command current. Here, the d- and q-axis command voltages Vd and Vq are calculated. In this case, the control device 60 functions as the q-axis current deviation calculation unit 84a, the d-axis current deviation calculation unit 84b, the q-axis current feedback control unit 85a, and the d-axis current feedback control unit 85b described in the preceding Fig. 4.

In step S17, dq-axis interference-suppression control is performed based on the d-axis and q-axis command voltages Vd and Vq, the frequency f, and the d-axis and q-axis inductances Ld and Lq. The d-axis and q-axis inductances Ld and Lq may be calculated using values based on at least one of the U, V, W phase currents Iu, Iv, Iw, the field current If, and the electrical angle $\theta e$ of the rotor 21. In the processing of step S17, the control device 60 functions as the interference-suppression control unit 86 described the preceding Fig. 4.

In step S18, feedforward control is performed based on the d-axis and q-axis command voltages Vd and Vq, and the d-axis and q-axis input voltages Esd and Esq. In this case, the control device 60 functions as the d-axis and q-axis feedforward control units 87a and 87b described in the preceding Fig. 4.

In step S19, the U, V, and W phase modulation rates Mu, Mv, and Mw are calculated based on the d-axis and q-axis command voltages Vd and Vq, the phase information $\theta a$, and the power supply voltage VDC. In this case, the control device 60 functions as the fixed coordinate conversion unit 88 and the modulation unit 89 described in the preceding Fig. 4.

In step S20, the electrical angle $\theta e$ of the rotor 21 is acquired based on the angle sensor 53. In addition, the detected value from the field current sensor 52 is acquired as the field current If. In step S21, the phase currents Iu, Iv, Iw are converted to the second d-axis and q-axis currents id2, iq2 based on the electrical angle $\theta e$ of the rotor 21. In this case, the control device 60 functions as the second coordinate conversion unit 110 described in the preceding Fig. 3.

In step S22, the field target current If* is set based on the second d-axis current id2, the d-axis and q-axis inductances Ld and Lq, and the coupling inductance Lmf. In this case, the control device 60 functions as the target current setting unit 120 described in the preceding Fig. 9.

In step S23, feedback control is performed to set the field current If to the field target current If*. Here, the field command voltage Vf is calculated. In this case, the control device 60 functions as the field current deviation calculation unit 121 and the field current feedback control unit 122 described in the preceding in Fig. 9.

In step S24, the field modulation rate Mf is calculated based on the field command voltage Vf and the power supply voltage VDC. In this case, the control device 60 functions as the division unit 123 described in the preceding Fig. 9.

In step S25, switching control of the inverter 31 is performed based on the respective phase modulation rates Mu, Mv, and Mw. In this case, the control device 60 functions as the comparison unit 90 and the inversion unit 91. In addition, switching control of the field energizing circuit 33 is performed based on the field modulation rate Mf. In this case, the control device 60 functions as the comparison unit 124 and the inversion unit 125. In the present embodiment, the processing in steps S16 to S19 and S25 corresponds to an armature current control unit.

Note that the processing in steps S13 to S19 and S25 constitutes the processing for performing three-phase charging control and corresponds to a first control unit. The processing of steps S20 to S25 constitute the processing for the torque reduction control and correspond to a second control unit. The processing of steps S20 to S24 need not be performed only after the processing of step S19; it may also be performed after the processing of step S12 and before the processing of step S13. In addition, the processing of steps S13 to S19 and the processing of step S20 may be performed in parallel.

In external charging control mentioned above, three-phase charging control is performed while the storage battery 10 and the three-phase AC power supply 41 are electrically connected via the phase windings 24U, 24V, 24W, and the inverter 31. This charges the storage battery 10. In this case, current flowing through each phase winding 24U, 24V, and 24W generates a reluctance torque TR, which can cause various problems.

Therefore, in the present embodiment, torque reduction control is performed so that the generated torque Trq of the rotary electric machine 20 during three-phase charging control is reduced compared to when no current flows through the field winding 22. This reduces the total torque of the magnet torque TM and the reluctance torque TR compared to when no current flows through the field winding 22. Therefore, it is possible to suppress torque from being generated in the rotary electric machine 20 during charging of the storage battery 10. As a result, it is possible to suppress problems caused by the torque generated by the rotary electric machine 20 from occurring during charging of the storage battery 10.

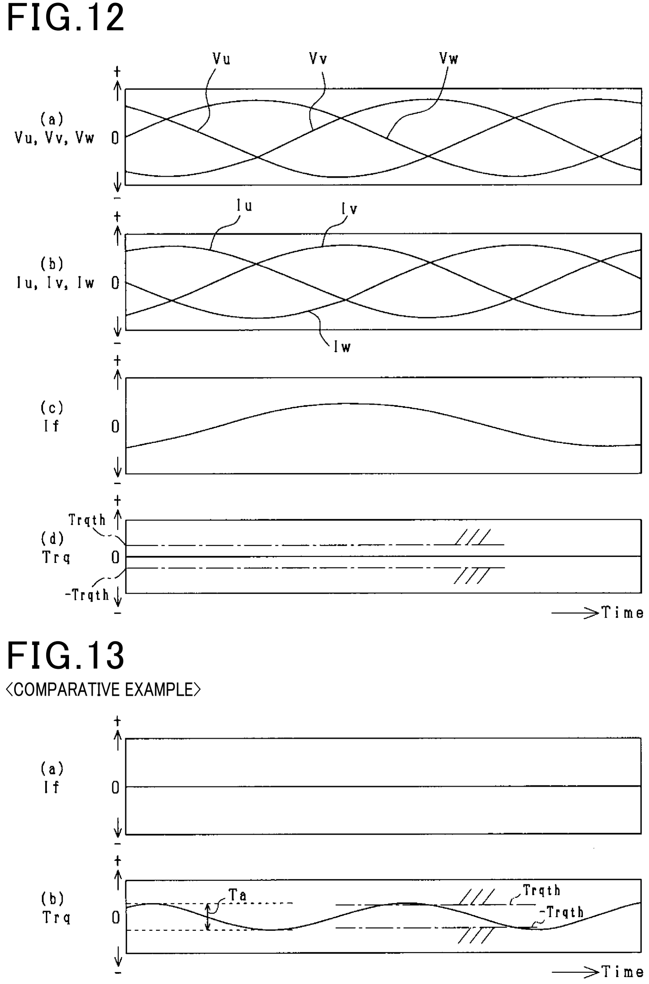

An example of external charging control will be described below with reference to Fig. 12. In Fig. 12, (a) shows the transition of each phase voltage Vu, Vv, Vw, (b) shows the transition of each phase current Iu, Iv, Iw, (c) shows the transition of the field current If, and (d) shows the transition of the generated torque T(rq) of the rotary electric machine 20. In Fig. 12(b), the direction of current flow from the second end to the first end of each phase winding 24U, 24V, and 24W is defined as positive, and the direction of current flow from the first end to the second end of each phase winding 24U, 24V, and 24W is defined as negative.

During external charging control, torque reduction control is performed, and an alternating field current If flows through the field winding 22. The field current If is controlled to be a current in opposite phase to the second d-axis current id2. This enables the magnet torque TM to be generated such that the combined torque of the reluctance torque TR and the magnet torque TM is reduced compared to when no current flows through the field winding 22. Therefore, the magnitude of the generated torque Trq of the rotary electric machine 20 is suppressed from exceeding the torque threshold Trqth. The torque threshold Trqth may be, for example, a torque at which the drive wheel 12 begins to rotate, and is set to the upper limit of the range assumed for the torque at which the drive wheel 12 begins to rotate.

Fig. 13 shows a comparative example, different from the present embodiment, where energization to the field winding 22 is interrupted during external charging control. In Fig. 13, (a) shows the variation of the field current If, and (b) shows the variation of the generated torque Trq of the rotary electric machine 20.

In the comparative example, during external charging control, the field winding 22 is deenergized, so the field current If remains constant at zero. In this case, although the reluctance torque TR is generated, the absence of the magnet torque TM may cause the fluctuation range Ta of the generated torque Trq of the rotary electric machine 20 to exceed the range defined by the torque threshold Trqth. If the generated torque Trq exceeds the torque threshold Trqth, it may cause discomfort to the user during external charging control.

In this regard, as described above, torque reduction control is performed during external charging control in the present embodiment. This prevents the magnitude of the torque Trq generated by the rotary electric machine 20 from becoming greater than the torque threshold value Trqth. As a result, it is possible to prevent the user from feeling uncomfortable during external charging control.

Based on the phase information $\theta a$ of the U-phase voltage Vu, the respective phase currents Iu, Iv, Iw are converted into the first d-axis and q-axis currents id1 and iq1. In the first dq coordinate system, the d and q axis command currents id* and iq* are set such that the direction of the current vector i flowing through each phase winding 24U, 24V, 24W aligns with the direction of the voltage vector V determined from the respective phase voltages Vu, Vv, Vw. Then, the d-axis and q-axis currents id1 and iq1 are controlled by the d-axis and q-axis command currents id* and iq*.

As shown in Figs. 12 (a) and 12 (b), by performing the above-mentioned current feedback control, the phase currents Iu, Iv, and Iw are controlled so that the phases of the phase currents Iu, Iv, and Iw are aligned with the phases of the phase voltages Vu, Vv, and Vw. This allows the power factor determined from the phase voltages Vu, Vv, Vw and the phase currents Iu, Iv, Iw to be brought closer to 1. Therefore, it is possible to reduce the generated torque Trq of the rotary electric machine 20 during three-phase charging control while improving the charging efficiency of the storage battery 10.

The phase information $\theta a$ of the U-phase voltage Vu is used as the periodically fluctuating phase information during current feedback control of the d- and q-axis currents id1 and iq1. As a result, during external charging control, the first d- and q-axis currents id1 and iq1, which are DC currents in the first dq coordinate system, are set as control targets, and current feedback control is performed. Therefore, in the first dq coordinate system, a configuration suitable for performing current feedback control can be realized, wherein the direction of the current vector i flowing through each phase winding 24U, 24V, 24W is aligned with the direction of the voltage vector V determined from the respective phase voltages Vu, Vv, Vw. As a result, the power factor determined by the phase voltages Vu, Vv, Vw and the phase currents Iu, Iv, Iw can be effectively increased.

<Second Embodiment>

The following describes the second embodiment, focusing on the differences from the first embodiment while referring to the drawings. In the present embodiment, the configuration of torque reduction control is modified.

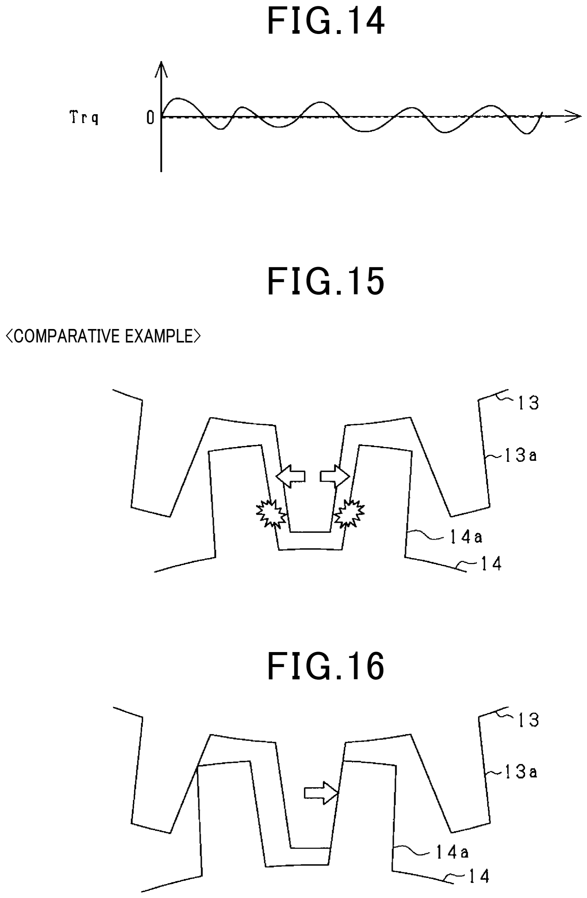

Fig. 14 shows the waveform of the generated torque Trq when the field current If is generated as described by the above equation (eq2) during torque reduction control. In this case, theoretically, as shown by the dashed line in Fig. 14, the generated torque Trq of the rotary electric machine 20 becomes zero. However, in practice, as shown by the solid line in Fig. 14, the generated torque Trq may fluctuate slightly due to detection errors in the phase current sensor 51 and other factors. In this case, the polarity of the generated torque Trq alternates between positive and negative.

As shown in Fig. 15, backlash is provided in a first gear 13 and a second gear 14 that constitute the power transmission mechanism 11. Fig. 15 illustrates external gears as examples of each gear 13 and 14. In a configuration where backlash is provided, when the polarity of the torque Trq generated by the rotor 21 alternates between positive and negative, the rotational direction of the first gear 13 and the second gear 14 alternates, and this can cause tooth contact to occur, where teeth 13a of the first gear 13 and teeth 14a of the second gear 14 collide with each other.

In external charging control, if the magnitude of the torque Trq generated by the rotor 21 falls below the torque threshold Trqth and the tooth contact noise of the gears increases despite the reduction in the torque Trq generated by the rotor 21, the NV (Noise, Vibration) of the system will deteriorate.

Therefore, in the present embodiment, as shown in Fig. 16, the pressing state between the teeth 13a of the first gear 13 and the teeth 14a of the second gear 14 is maintained to suppress the tooth contact noise of the gears from generating and improve NV.

The target current setting unit 120 sets the field target current If* such that the time-averaged value of the torque Trq generated by the rotary electric machine 20 over one or more cycles of the alternating current flowing through each phase winding 24U, 24V, 24W is reduced compared to when no current flows through the field winding 22. At this point, the target current setting unit 120 sets the field target current If* such that the time-averaged value of the generated torque Trq is offset from zero.

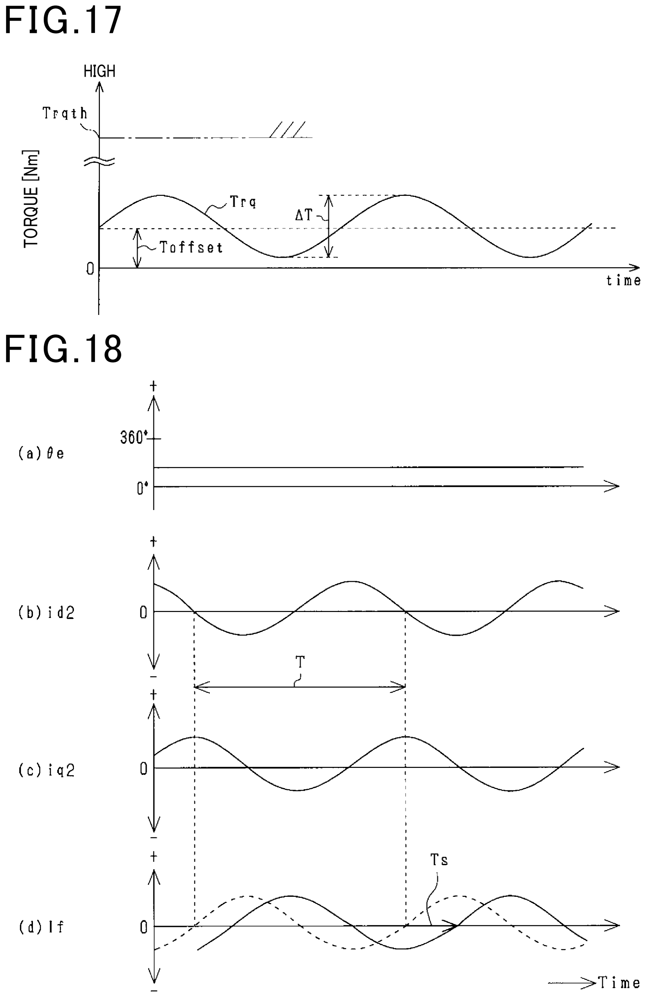

Fig. 17 shows an example where, in torque reduction control, the field target current If* is set to offset the generated torque Trq of the rotary electric machine 20 toward the positive side. In Fig. 17, the time-averaged value of the generated torque Trq of the rotary electric machine 20 is offset by an offset value Toffset, and a fluctuation range ΔT of the generated torque Trq is maintained within the range from 0 to the torque threshold Trqth. This suppresses the positive and negative polarity of the generated torque Trq in the rotary electric machine 20 from alternating, thereby suppressing the tooth contact noise from generating. Therefore, it is possible to improve the NV.

Specifically, the target current setting unit 120 shifts the phase of the field target current If* relative to the field current If, which is either in reverse phase or in phase with the second d-axis current id2. The field current deviation calculation unit 121, the field current feedback control unit 122, the division unit 123, the comparison unit 124, and the inversion unit 125 control the field current If to the field target current If*. As a result, the magnet torque TM becomes either larger or smaller than the reluctance torque TR. Therefore, the time-averaged value of the torque Trq generated by the rotary electric machine 20 can be offset from zero.

For example, the target current setting unit 120 can set the field target current If* using information (specifically, map information or mathematical formula information) that associates the second d-axis current id2 with the field target current If* whose phase is shifted relative to the second d-axis current id2. In addition, for example, when the target current setting unit 120 sets the field target current If* using information that associates the input current with a field target current If* that is in the opposite phase to the input current, it is possible to set the field target current If* using a shift current that is phase-shifted with respect to the second d-axis current id2 as the input current. For example, as the shift current, it is possible to use a current transformed from the three-phase fixed coordinate system to the second dq coordinate system based on phase information shifted either positively or negatively relative to the electrical angle θe of the rotor 21.

Fig. 18 shows an example of torque reduction control. In Fig. 18, (a) to (d) correspond to the preceding Fig. 10 (a) to (d). Fig. 18 (d) shows the same waveform as in the previous Fig. 10 (d) with dashed lines, and shows the waveform when the phase of the field current If is shifted with solid lines. Here, the phase of the field current If is shifted by a predetermined shift amount Ts.

The phase shift amount Ts of the field current If is expressed in the range of $0° \leq Ts \leq 360°$, where 360° is the amount of phase shift by the period T of the field current If relative to the field current If which is in opposite phase to the second d-axis current id2. In this case, as the phase shift amount Ts of the field current If increases within the range of $0° < Ts \leq 180°$, the offset value Toffset increases and the fluctuation range ΔT of the torque Trq generated by the rotary electric machine 20 increases. If the fluctuation range ΔT of the torque Trq generated by the rotary electric machine 20 is large, the generated torque Trq of the rotor 21 may exceed the torque threshold value Trqth or fall below zero.

The phase shift amount Ts of the field current If is determined according to the characteristics of the rotary electric machine 20 (e.g., the inductance and electrical resistance of the rotary electric machine 20) so that the generated torque Trq of the rotor 21 falls within the range from zero to the torque threshold Trqth. For example, the phase shift amount Ts of the field current If is determined within the range of $0° < Ts \leq 30°$, $0° < Ts \leq 60°$, or $0° < Ts \leq 90°$. Note that in the present embodiment, the processing in steps S23 to S25 corresponds to a field current control unit.

According to the present embodiment, by determining the phase shift amount Ts of the field current If based on the characteristics of the rotary electric machine 20, it is possible to suppress the generated torque Trq from exceeding the torque threshold Trqth or falling below zero when offsetting the time-averaged value of the generated torque Trq of the rotor 21 from zero. Therefore, it is possible to achieve a configuration that is well-suited for improving NV.

<Other Embodiments>

The above embodiments may be modified and implemented as follows.

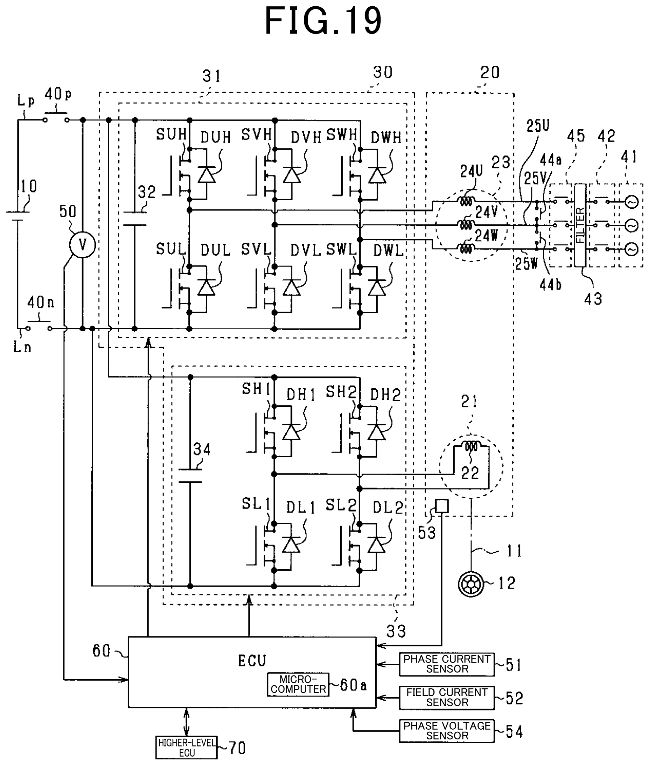

- As shown in Fig. 19, the system may include a motor-side switch 45 (equivalent to a selector switch). The motor-side switch 45 is positioned closer to the rotary electric machine 20 than the filter 43 in the U, V, W phase charging paths 25U, 25V, 25W. For example, each motor-side switch 45 is a mechanical relay or a semiconductor switching element.

The control unit 60 controls each motor-side switch 45. When performing external charging control, the control device 60 turns on each main switch 40p, 40n, input switch 42, and motor-side switch 45, while turning off each neutral point switch 44a, 44b. On the other hand, when the control device 60 does not perform external charging control or when it drives the rotary electric machine 20 to rotate, the control device 60 turns on each main switch 40p, 40n and each neutral point switch 44a, 44b, while turning off the input switch 42 and the motor-side switch 45.

In the present embodiment, when the rotary electric machine 20 is rotary driven, each neutral point switch 44a and 44b is turned on, and each motor-side switch 45 is turned off. In this case, during the rotational drive of the rotary electric machine 20, it is possible to suppress the current between each phase winding 24U, 24V, and 24W from flowing via the filter 43. Therefore, in a configuration where the rotary electric machine 20 is used as a part of a charger that charges the storage battery 10, it is possible to suppress unintended current from flowing within the system.

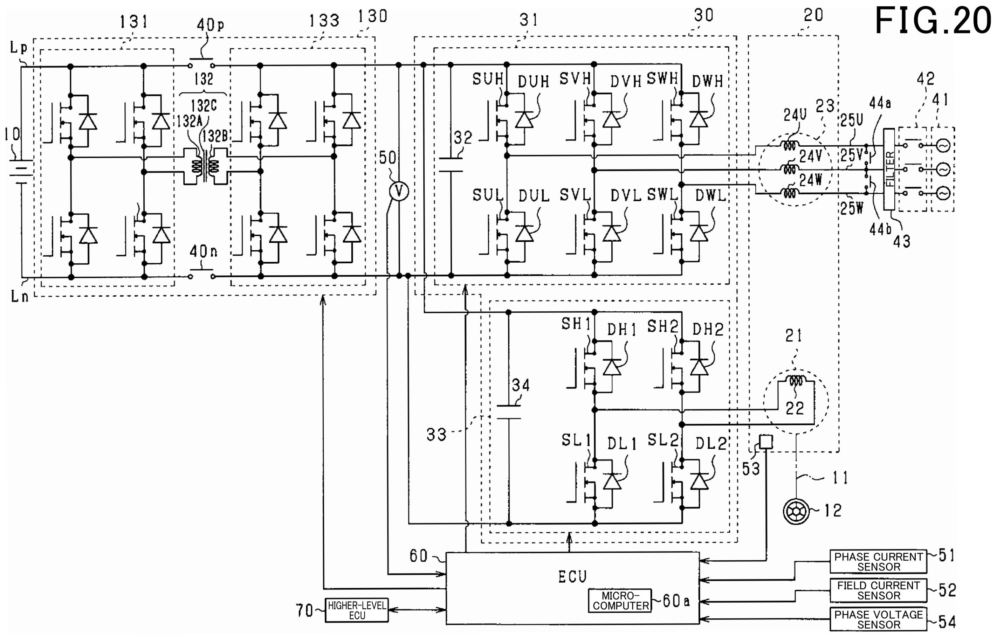

- The input switches 42 may not be disposed in each phase charging path 25U, 25V, 25W. In addition, the high-potential side main switch 40p may not be disposed in the high-potential side electrical path Lp, and the low-potential side main switch 40n may not be disposed in the low-potential side electrical path Ln.
- As shown in Fig. 20, the system may include a DC-DC converter 130. The DC-DC converter 130 performs power transfer between the storage battery 10 and the power converter 30. In the present embodiment, the DC-DC converter 130 is an isolated DC-DC converter.

The DC-DC converter 130 employs a DAB (Dual Active Bridge) configuration, including a first full-bridge circuit 131, a second full-bridge circuit 133, and a transformer 132 for power transfer between the full-bridge circuits 131 and 133. The transformer 132 includes a first coil 132A connected to the first full-bridge circuit 131, a second coil 132B connected to the second full-bridge circuit 133, and a core 132C that magnetically couples the respective coils 132A and 132B. Note that the DC-DC converter 130 may also be of another type (e.g., LLC type).

Each full-bridge circuit 131, 133 is composed of switches in upper and lower arms. The switches in each full-bridge circuit 131, 133 are semiconductor switching elements, specifically N-channel MOSFETs. The switches of each full-bridge circuit 131, 133 are controlled by the control device 60.

- The command current setting unit 80 may set the d-axis command current id* to a value otherer than zero in the first dq coordinate system to align the direction of the current flowing through each phase winding 24U, 24V, 24W with the q-axis direction. For example, the command current setting unit 80 can set the d-axis command current id* and the q-axis command current iq* to values corresponding to the power supply voltage VDC, within a range where the power factor determined from the current flowing through each phase winding 24U, 24V, 24W and the respective phase voltages Vu, Vv, Vw is at or above a predetermined value (e.g., a value near 1).
- The first coordinate conversion unit 100 can perform a transformation from the three-phase fixed coordinate system to the first dq coordinate system such that the direction of the voltage vector V, determined from the respective phase voltages Vu, Vv, and Vw based on the phase information $\theta$a, points in a direction other than the q-axis direction in the first dq coordinate system. In this case, the command current setting unit 80 sets the d-axis command current id* and the q-axis command current iq* such that, in the first dq coordinate system, the direction of the first d, q-axis currents id1 and iq1 aligns with the direction of the voltage vector pointing in a direction other than the q-axis direction.
- The first coordinate conversion unit 100 can convert the current and voltage used in three-phase charging control into the current and voltage in the first dq coordinate system based on the V-phase voltage Vv or the W-phase voltage Vw instead of the U-phase voltage Vu.

For example, taking the V-phase voltage Vv as an example, the V-phase voltage Vv is input to the first phase acquisition unit 101. The V-phase voltage Vv is the input voltage supplied from the three-phase AC power supply 41 to the V-phase winding 24V. The first phase acquisition unit 101 can use the detection value from the phase voltage sensor 54 as the V-phase voltage Vv. The first phase acquisition unit 101 acquires the phase information of the V-phase voltage Vv. The phase information of the V-phase voltage Vv is the same as the phase information $\theta a$ of the U-phase voltage Vu. The phase information of the V-phase voltage Vv is input to the first current conversion unit 102 and the voltage conversion unit 103.

The first current conversion unit 102 can convert the U, V, and W phase currents Iu, Iv, Iw into the first d-axis current id1 and the first q-axis current iq1 based on the phase information of the V phase voltage Vv. The voltage conversion unit 103 can convert the U, V, and W phase voltages Vu, Vv, Vw into the d-axis and q-axis input voltages Esd and Esq based on the phase information of the V phase voltage Vv.

- In the first embodiment, the target current setting unit 120 may set the field target current If* to a current other than the second d-axis current id2 and its opposite-phase current, within the range where the sum of the magnetizing torque TM and the reluctance torque TR is reduced. For example, the target current setting unit 120 may set the field current If* such that the phase difference $\theta s$ between the field current If and the second d-axis current id2 is within one of the ranges: $90° < \theta s < 270°$, $150° \leq \theta s \leq 210°$, or $170° \leq \theta s \leq 190°$.

- The rotary electric machine 20 may be a rotary electric machine having reverse pole polarity (Lq - Ld > 0), characteristics where the q-axis inductance Lq is larger than the d-axis inductance Ld. In this case, the target current setting unit 120 sets the current in phase with the second d-axis current id2 as the field target current If*. This allows the field current If to be applied such that the magnet torque TM is generated in the direction opposite to that of the reluctance torque TR, taking into account the characteristics of the rotary electric machine 20. Therefore, in torque reduction control, the magnet torque TM can be generated accurately so that the total torque of the reluctance torque TR and the magnet torque TM is reduced compared to when no current flows through the field winding 22.

Note that the target current setting unit 120 can set the field target current If* to a current other than one in phase with the second d-axis current id2, just as when the rotary electric machine 20 has forward-pole polarity. For example, the target current setting unit 120 can set the field target current If* such that, within the range where the combined torque of magnet torque TM and reluctance torque TR is reduced, $\theta s$ falls within the ranges $-90° < \theta s < 90°$, $-30° \leq \theta s \leq 30°$, or $-10° \leq \theta s \leq 10°$. In addition e, for example, the target current setting unit 120 can set the field target current If* so that the phase of the field target current If* is shifted by a shift amount Ts relative to the field current If, which is in phase with the second d-axis current id2, in order to offset the time-average value of the generated torque Trq of the rotary electric machine 20 from zero.

- In torque reduction control of the second embodiment, the polarity of the generated torque Trq may become negative during a portion of one cycle of the generated torque Trq of the rotary electric machine 20, or the polarity of the generated torque Trq may become negative during a portion of some cycles out of multiple cycles. Even in this case, by offsetting the time-averaged value of the generated torque Trq over multiple cycles of the alternating current flowing through each phase winding 24U, 24V, and 24W from zero, it is possible to reduce the tooth contact noise or reduce the number of tooth contact occurrences even if tooth contact occurs.

- The switches constituting the power converter 30 and each full-bridge circuit 131, 133 are not limited to N-channel MOSFETs, but they may also be, for example, IGBTs (Insulated Gate Bipolar Transistors). In this case, it is sufficient for a freewheeling diode to be connected in reverse parallel to the IGBT.

- The storage unit connected to power converters such as inverters may include not only storage batteries, but also, for example, large-capacity electric double-layer capacitors, or units equipped with both storage batteries and electric double-layer capacitors.

- A mobile body on which the control device 60 is mounted may be not only a vehicle but also, for example, an aircraft or a ship. In a case of the aircraft, a rotating drive target may be, for example, a propeller, and in a case of the ship, a rotating drive target may be, for example, a screw propeller. Further, the control device may be installed not only on mobile bodies but also on stationary equipment.

A control device and methods described in the present disclosure may be realized by a dedicated computer provided by configuring a processor and memory programmed to perform one or more functions embodied by the computer program. Alternatively, the control device and method described in the present disclosure may be performed by a dedicated computer provided by configuring a processor with one or more dedicated hardware logic circuits. Alternatively, the control device and methods described in the present disclosure may be realized by one or more dedicated computers composed of a processor and memory programmed to perform one or more functions, in combination with a processor composed of one or more hardware logic circuits. In addition, the computer program may also be stored in a computer-readable, non-transitory tangible storage media as instructions to be executed by a computer.

The following describes the characteristic configurations extracted from each of the above embodiments.

[Configuration 1]

A control device for a power converter (60) applicable to a system, the system including:

a rotary electric machine (20) having armature windings (24U, 24V, 24W) and a field winding (22), a storage unit (10) that stores the drive power of the rotary electric machine, a first power converter (31) electrically connected to the armature windings and which controls the current flowing through the armature windings, a second power converter (33) electrically connected to the field winding and controls the current flowing through the field winding, a first control unit that performs switching control of the first power converter in a state in which an AC power supply (41) is electrically connected to the storage unit via the armature windings and the first power converter so that a current flows from the AC power supply to the power storage unit, and a second control unit that performs switching control of the second power converter so that torque of the rotary electric machine generated during switching control of the first power converter is reduced compared to when no current flows through the field winding.

[Configuration 2]

The control device for the power converter according to configuration 1, wherein

the rotary electric machine has a characteristic that a d-axis inductance is larger than a q-axis inductance, and the second control unit performs switching control of the second power converter so that a current flowing through the field winding is in reverse phase with a d-axis component of the current flowing through the armature windings.

[Configuration 3]

The control device for the power converter according to configuration 1, wherein

the rotary electric machine has a characteristic that a q-axis inductance is larger than a d-axis inductance, and the second control unit performs switching control of the second power converter so that a current flowing through the field winding is in phase with a d-axis component of the current flowing through the armature windings.

[Configuration 4]

The control device for the power converter according to any one of configurations 1 to 3, wherein the first control unit performs switching control of the first power converter so that a phase of the current flowing through the armature windings is aligned with a phase of an input voltage supplied from the AC power supply to the armature windings.

[Configuration 5]

The control device for the power converter according to configuration 4, wherein the first control unit includes:

a coordinate conversion unit that converts the current flowing through the armature windings into a current in a dq coordinate system based on phase information of the input voltage, in the dq coordinate system, a command current setting unit that sets a command current of the armature windings so that the direction of the current flowing through the armature windings aligns with the direction of a voltage vector determined from the input voltage, and an armature current control unit that performs switching control of the first power converter to control the current flowing through the armature windings to the command current.

[Configuration 6]

The control device for the power converter according to any one of configurations 1 to 5, wherein

the system includes at least one pair of gears (13, 14) that constitute a power transmission mechanism (11) from a rotor (21) of the rotary electric machine to a rotating drive target (12), rotate by rotational power from the rotor, and mesh with each other, and the second control unit performs switching control of the second power converter so that the torque of the rotary electric machine generated during switching control of the first power converter is reduced compared to when no current flows through the field winding, and so that a time-averaged value of the torque of the rotary electric machine over one or more cycles of the alternating current flowing through the armature windings is offset from zero.

[Configuration 7]

The control device for the power converter according to configuration 6, wherein the second control unit includes:

a target current setting unit that sets a field target current, and

a field current control unit that controls a field current flowing through the field winding to the field target current, wherein

the target current setting unit shifts a phase of the field target current relative to the field current, which is either out of phase or in phase with the d-axis component of the current flowing through the armature windings, thereby offsetting the time-averaged value from zero.

[Configuration 8]

The control device for the power converter according to any one of configurations 1 to 7, wherein

the armature windings are multi-phase windings having first ends connected to the first power converter and second ends connected to each other at a neutral point, and

a neutral point switch (44a, 44b) is provided on the neutral point side of each of the armature windings, electrically connecting or disconnecting between each of the armature windings.

[Configuration 9]

The control device for the power converter according to any one of configurations 1 to 8, wherein a selector switch (42, 45) is provided between the armature windings and the AC power supply, which switches the conduction and interruption of the current flowing through the armature windings.

The present disclosure has been described in accordance with the embodiments, but it should be understood that the present disclosure is not limited to these embodiments or structures. The present disclosure encompasses various modifications and modifications within the scope of equivalents. In addition, various combinations and configurations, as well as other combinations and configurations including only one element, more, or less, are within the scope and scope of the present disclosure.

**Claims**

1. A control device for a power converter (60) applicable to a system, the system comprising:

   a rotary electric machine (20) having armature windings (24U, 24V, 24W) and a field winding (22),
   a storage unit (10) that stores the drive power of the rotary electric machine,
   a first power converter (31) electrically connected to the armature windings and which controls the current flowing through the armature windings,

   a second power converter (33) electrically connected to the field winding and controls the current flowing through the field winding,
   a first control unit that performs switching control of the first power converter in a state in which an AC power supply (41) is electrically connected to the storage unit via the armature windings and the first power converter so that a current flows from the AC power supply to the power storage unit, and
   a second control unit that performs switching control of the second power converter so that torque of the rotary electric machine generated during switching control of the first power converter is reduced compared to when no current flows through the field winding.

2. The control device for the power converter according to claim 1, wherein

   the rotary electric machine has a characteristic that a d-axis inductance is larger than a q-axis inductance, and
   the second control unit performs switching control of the second power converter so that a current flowing through the field winding is in reverse phase with a d-axis component of the current flowing through the armature windings.

3. The control device for the power converter according to claim 1, wherein

   the rotary electric machine has a characteristic that a q-axis inductance is larger than a d-axis inductance, and
   the second control unit performs switching control of the second power converter so that a current flowing through the field winding is in phase with a d-axis component of the current flowing through the armature windings.

4. The control device for the power converter according to any one of claims 1 to 3, wherein the first control unit performs switching control of the first power converter so that a phase of the current flowing through the armature windings is aligned with a phase of an input voltage supplied from the AC power supply to the armature windings.

5. The control device for the power converter according to claim 4, wherein the first control unit includes:

   a coordinate conversion unit that converts the current flowing through the armature windings into a current in a dq coordinate system based on phase information of the input voltage,

in the dq coordinate system, a command current setting unit that sets a command current of the armature windings so that the direction of the current flowing through the armature windings aligns with the direction of a voltage vector determined from the input voltage, and
an armature current control unit that performs switching control of the first power converter to control the current flowing through the armature windings to the command current.

6. The control device for the power converter according to any one of claims 1 to 3, wherein

the system includes at least one pair of gears (13, 14) that constitute a power transmission mechanism (11) from a rotor (21) of the rotary electric machine to a rotating drive target (12), rotate by rotational power from the rotor, and mesh with each other, and
the second control unit performs switching control of the second power converter so that the torque of the rotary electric machine generated during switching control of the first power converter is reduced compared to when no current flows through the field winding, and so that a time-averaged value of the torque of the rotary electric machine over one or more cycles of the alternating current flowing through the armature windings is offset from zero.

7. The control device for the power converter according to claim 6, wherein
the second control unit includes:

a target current setting unit that sets a field target current, and
a field current control unit that controls a field current flowing through the field winding to the field target current, wherein
the target current setting unit shifts a phase of the field target current relative to the field current, which is either out of phase or in phase with the d-axis component of the current flowing through the armature windings, thereby offsetting the time-averaged value from zero.

8. The control device for the power converter according to any one of claims 1 to 3, wherein

the armature windings are multi-phase windings having first ends connected to the first power converter and second ends connected to each other at a neutral point, and
a neutral point switch (44a, 44b) is provided on the neutral point side of each of the armature windings, electrically connecting or disconnecting between each of the armature windings.

9. The control device for the power converter according to any one of claims 1 to 3, wherein
a selector switch (42, 45) is provided between the armature windings and the AC power supply, which switches the conduction and interruption of the current flowing through the armature windings.

10. A program applicable to a system, the system comprising:

a rotary electric machine (20) having armature windings (24U, 24V, 24W) and a field winding (22),
a storage unit (10) that stores the drive power of the rotary electric machine,
a first power converter (31) electrically connected to the armature windings and which controls the current flowing through the armature windings,
a second power converter (33) electrically connected to the field windings and controls the current flowing through the field winding, and
a computer (60a), wherein
the program causes the computer to perform the following:

a first control process that performs switching control of the first power converter in a state in which an AC power supply (41) is electrically connected to the storage unit via the armature windings and the first power converter so that a current flows from the AC power supply to the power storage unit, and
a second control process that performs switching control of the second power converter so that torque of the rotary electric machine generated during switching control of the first power converter is reduced compared to when no current flows through the field winding.

# FIG.1

# FIG.2

100

102
Iu →
Iv → UVW/ → id1
Iw → dq → iq1

103
Vu →
Vv → UVW/ → Esd
Vw → dq → Esq

θa
101
FIRST PHASE
ACQUISITION UNIT

# FIG.3

110

112
Iu →
Iv → UVW/ → id2
Iw → dq → iq2

θe
111
SECOND PHASE
ACQUISITION UNIT

53
ANGLE
SENSOR

# FIG.4

EP 4 738 693 A1

# FIG.5

(a) Vu, Vv, Vw

(b) Iu, Iv, Iw

(c) θa

(d) id1

(e) iq1

# FIG.6

# FIG.7

# FIG.8

# FIG.9

# FIG.10

(a) $\theta$ e

(b) i d2

$\theta$ s

T

(c) i q2

(d) l f

Time

# FIG.11

```
                    ┌──────────┐
                    │  START   │
                    └──────────┘
                          │
                          ▼                    ┌─ S10
              ⟨ PERFORM THREE-PHASE ⟩─── NO ────────────────┐
              ⟨  CHARGING CONTROL ? ⟩                       │
                          │ YES                             │
                          ▼        ┌─ S11                   │
              ┌────────────────────────┐                    │
              │  ACQUIRE FREQUENCY f,   │                   │
              │ REFERENCE VOLTAGE Vref  │                   │
              └────────────────────────┘                    │
                          │        ┌─ S12                    │
                          ▼                                  │
              ┌────────────────────────────┐                │
              │ ACQUIRE Iu, Iv, Iw AND Vu, Vv, Vw │          │
              └────────────────────────────┘                │
```

ACQUIRE θa, VDC — S13

SET COMMAND CURRENT — S14

CONVERT Iu, Iv, Iw TO id1, iq1; Vu, Vv, Vw TO Esd, Esq — S15

dq-AXIS CURRENT PI CONTROL (FB) — S16

dq-AXIS NON-INTERFERENCE CONTROL — S17

FEEDFORWARD CONTROL — S18

CALCULATE Mu, Mv, Mw — S19

ACQUIRE ELECTRICAL ANGLE θe ACQUIRE FIELD CURRENT If — S20

CONVERT Iu, Iv, Iw TO id2, iq2 — S21

SET If* — S22

FIELD CURRENT PI CONTROL (FB) — S23

CALCULATE Mf — S24

SWITCHING CONTROL — S25

END

# FIG.12

# FIG.13

⟨COMPARATIVE EXAMPLE⟩

# FIG.14

# FIG.15

⟨COMPARATIVE EXAMPLE⟩

# FIG.16

# FIG.17

HIGH

Trqth

TORQUE [Nm]

Trq

ΔT

Toffset

0

time

# FIG.18

(a) θe

360°

0°

+

(b) id2

0

−

T

(c) iq2

+

0

−

+

(d) If

Ts

0

−

Time

# FIG.19

# FIG.20

## INTERNATIONAL SEARCH REPORT

| International application No. |
| --- |
| **PCT/JP2024/019422** |

| A. | CLASSIFICATION OF SUBJECT MATTER |
| --- | --- |

*H02P 21/12*(2016.01)i; *H02P 27/06*(2006.01)i
FI:   H02P21/12; H02P27/06 ZHV

According to International Patent Classification (IPC) or to both national classification and IPC

| B. | FIELDS SEARCHED |
| --- | --- |

Minimum documentation searched (classification system followed by classification symbols)

H02P21/12; H02P27/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2013-242979 A (HITACHI, LTD.) 05 December 2013 (2013-12-05) <br> paragraphs [0052]-[0101], fig. 8 | 1-10 |
| A | JP 2022-121269 A (NISSAN MOTOR CO., LTD.) 19 August 2022 (2022-08-19) <br> paragraphs [0001]-[0158], fig. 1-18 | 1-10 |
| A | WO 2018/117144 A1 (DENSO CORPORATION) 28 June 2018 (2018-06-28) <br> paragraphs [0001]-[0158], fig. 1-27 | 1-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 July 2024** | **23 July 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

International application No.

**PCT/JP2024/019422**

| Patent document cited in search report | | | Publication date (day/month/year) | Patent family member(s) | Publication date (day/month/year) |
|---|---|---|---|---|---|
| JP | 2013-242979 | A | 05 December 2013 | (Family: none) | |
| JP | 2022-121269 | A | 19 August 2022 | (Family: none) | |
| WO | 2018/117144 | A1 | 28 June 2018 | US 2019/0312539 A1 paragraphs [0001]-[0180], fig. 1-27<br>EP 3562009 A1<br>CN 110089013 A | |

Form PCT/ISA/210 (patent family annex) (July 2022)

33

**REFERENCES CITED IN THE DESCRIPTION**

**Patent documents cited in the description**

- JP 2023105070 A
- WO 2010012924 A